# EUROPEAN PATENT SPECIFICATION

(11) **EP 3 368 416 B1**
(45) Date of publication and mention of the grant of the patent: **04.03.2020**
(21) Application number: 16790685.8
(22) Date of filing: 27.10.2016
(51) Int. Cl.: B64D 11/00

(54) **IN-FLIGHT SERVICE CART AND THERMALLY INSULATED CONTAINER FOR AN IN-FLIGHT SERVICE CART**
BORDSERVIERWAGEN UND WÄREMEISOLIERTER BEHÄLTER FÜR BORDSERVIERWAGEN
CHARIOT DE SERVICES À BORD ET CONTENEUR ISOLÉ THERMIQUEMENT POUR CHARIOT DE SERVICES À BORD

(30) Priority: 30.10.2015 GB 201519257
(43) Date of publication of application: 05.09.2018
(73) Proprietor: Tower Cold Chain Solutions Limited, Reading, Berkshire RG7 4PE (GB); DHL Supply Chain Limited, Milton Keynes MK9 1EQ (GB)
(72) Inventor: KRZAK, Christopher, Pangbourne Berkshire RG8 8ES (GB); VANN, James, Hampton Hill Middlesex TW12 1DB (GB); WILLMOR, Martin, Cheshunt, Herts EN8 8QD (GB); TRIVEDI, Chirag, Camberley, GU15 1EQ (GB); SIMPSON, Robert, Cuffley, Herts EN6 4RU (GB)
(74) Representative: Morris, Jonathan Paul
(86) International application number: PCT/GB2016/053334
(87) International publication number: WO 2017/072508

(56) References cited:
- WO-A1-2008/104639
- DE-A1-102012 204 876
- US-A- 4 898 294
- US-A1- 2015 292 787

## Description

The present invention relates to an in-flight service cart and a thermally insulated container for an in-flight service cart.

When storing foodstuffs on an aircraft it is desirable to maintain the temperature of foodstuffs, such as food and beverages, in the range +2°C to +8°C. If the temperature of the foodstuffs becomes too high, there is an increased risk of bacteria forming in the food and the food will spoil more quickly. If the foodstuffs drop below +2°C there is a possibility that the foodstuffs will freeze. While freezing the foodstuffs is not dangerous for the consumer, it is recognised that the freezing and defrosting foodstuffs can detract from the presentation of the foodstuffs, and in some cases the taste. Furthermore, if the foodstuffs are frozen, there can be a delay in serving the foodstuffs, while waiting for them to defrost.

It is known in the art to use dry ice (carbon dioxide ice) in order to chill the foods within the in-flight service carts. While this ensures that the products do not exceed the +8°C range, there is a tendency for many foodstuffs to freeze. Also, with this technology it is difficult to control the temperature distribution within the cart, which can lead to cold spots occurring, and the dry ice can run out relatively quickly.

Consequently, there is the desire for a refrigeration type unit for an aircraft that provides more even temperature distribution within the container, thereby reducing the possibility of cold spots occurring and reducing the possibility of foodstuffs stored therein from freezing. There is also a desire to increase the period of time for which foodstuffs are chilled, for example for use on long-haul flights.

Another problem on aircraft is that in-flight service carts, and any containers stored therein, may experience sudden loading, for example due to the aircraft flying through turbulent air. This can cause unsecured doors and hatches to swing violently, risking injury to cabin crew and passengers. Accordingly, it is usual for cart and container doors to be closed, and secured in place during a flight. At the same time, the cabin crew has to frequently access the in-flight service carts, and any containers stored therein, for example when serving food. Therefore it is desirable to have in-flight service carts and containers that can be quickly and easily opened when access is required. Thus a balance has to be struck between, on the one hand providing secure locks on doors, and on the other hand, providing fast easy access to goods stored in the service carts and containers.

A further problem for in-flight service carts is that space is very limited within the aircraft cabin and therefore it is desirable to provide compact units, with few protruding parts. In some circumstances, it is also desirable to produce a new in-flight service cart that meets current standards so that the cart is compatible for use on existing aircraft and with existing aircraft equipment. This often constrains the service cart dimensions, for example to fit within existing designated spaces, and to receive and store existing food trays. These dimensional constraints can be challenging, since the new cart is often required to provide improved thermodynamic performance, for example is required to maintain the temperature within the cart in a predetermined range for a longer period of time than previous designs. This can be difficult to achieve.

Other inflight service carts and thermally insulated containers are disclosed in US4898294, DE102012204876A1 and US2015/0292787.

It is an object of the present invention to provide an in-flight service cart and a thermally insulated container for the in-flight service cart that mitigates at least one of the aforementioned disadvantages, or at least provides an alternative configuration to known apparatus.

According to one aspect of the invention there is provided an in-flight service cart according to claim 1.

The arrangement provides a means of refrigerating an in-flight service cart, in an efficient manner. The arrangement of the container enables the goods to be stored within the desired temperature range for a period of around 24 hours under typical operating conditions. Since the container includes the thermally conductive inner casing, it is possible to use a thermal heat storage unit that has an operative phase change temperature that is close to, or within, the selected temperature range. This is useful since it significantly reduces the possibility of goods freezing in the payload.

Advantageous features of preferred embodiments are disclosed in the dependent claims 2-20.

According to another aspect of the invention there is provided a thermally insulated container according to claim 21.

In some embodiments the container includes a plurality of wheels.

An embodiment of the invention will now be described by way of example only with reference to the accompanying drawings, in which:
Figure 1 is an isometric view of an in-flight service cart according to the invention;

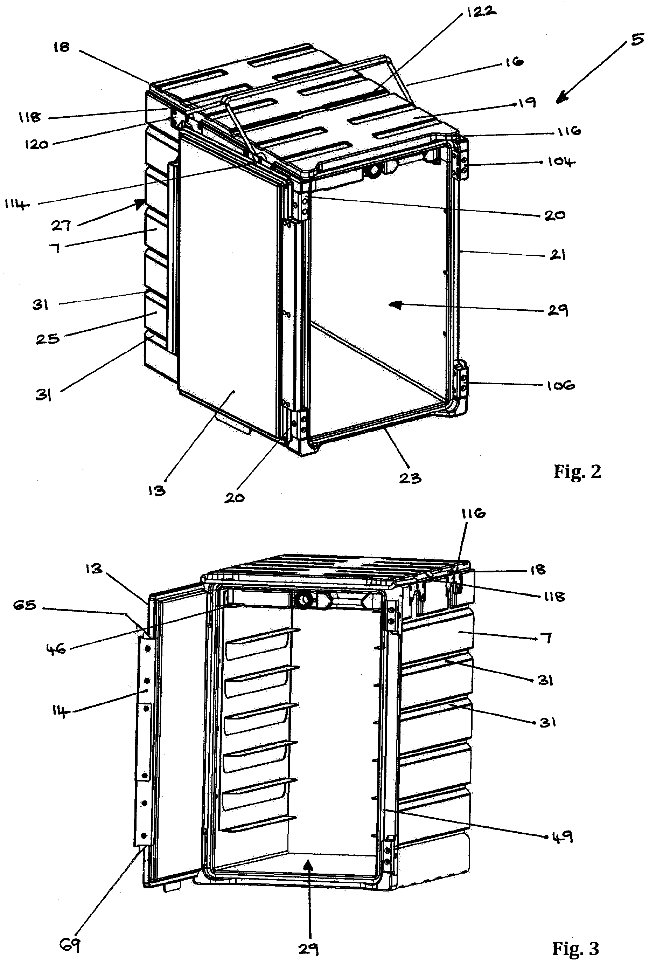

Figure 2 is an isometric view from the front of a thermally insulated container used in the in-flight service cart of Figure 1, with lifting handles in a lifting position, door in an open position, without inner brackets;
Figure 3 is an isometric view of the container of Figure 2, with lifting handles in a storage position, and including inner brackets for supporting trays;
Figure 4 is an isometric exploded view of part of a thermally conductive inner casing from the container of Figure 2;
Figure 5 is an isometric view of the thermally conductive inner casing from Figure 4, clad with vacuum thermal insulation panels;

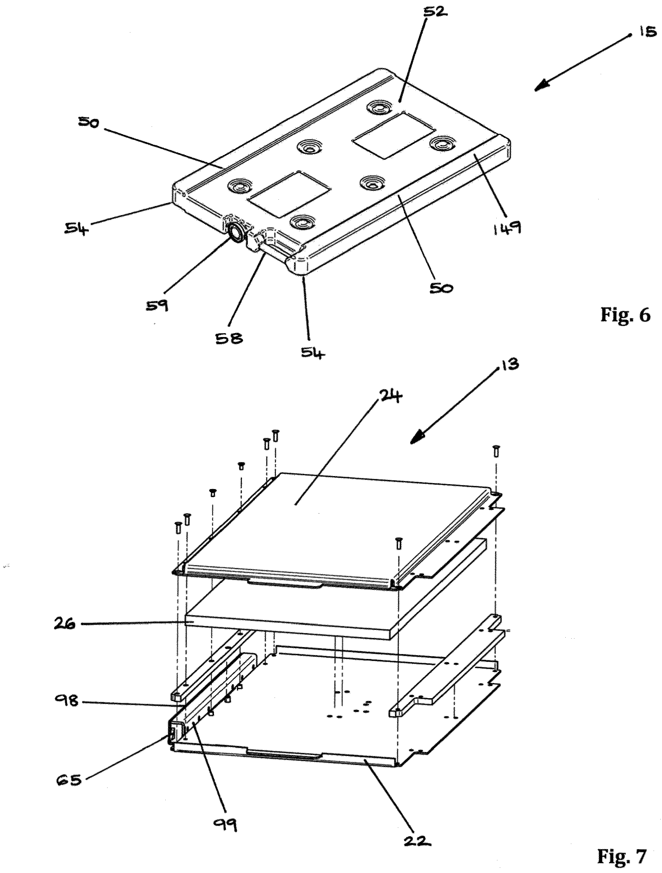

Figure 6 is an isometric view of a PCM unit used to cool the interior of the container;
Figure 7 is an isometric exploded view of the container door (inner side facing upwards);
Figure 8 is an isometric exploded view of part of the container door of Figure 7 (outer side facing upwards), which includes a locking mechanism;
Figure 9 is an isometric detailed view of an actuating part of the locking mechanism shown in Figure 8;
Figure 10 is an isometric view from the front of an alternative thermally insulated container, which is arranged for use in an in-flight service cart; and
Figure 11 is an isometric view from the rear of the container of Figure 10.

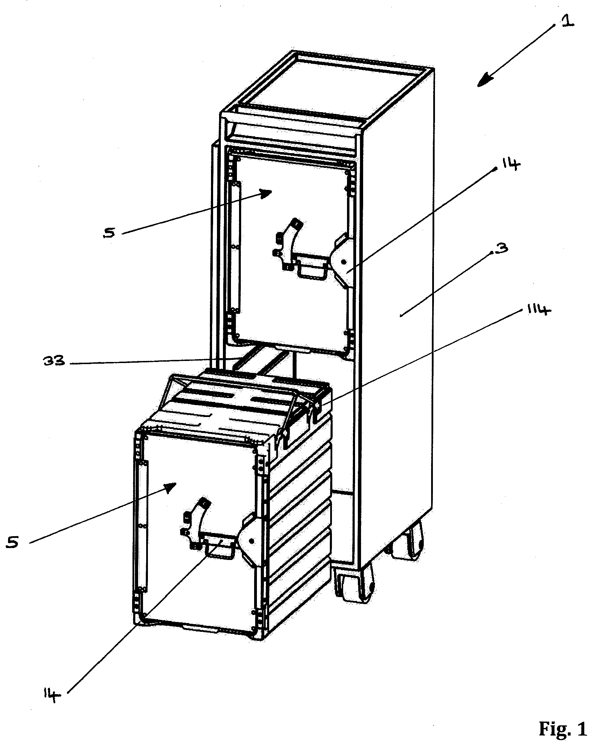

Figure 1 shows an in-flight service cart 1 in accordance with the present invention. The in-flight service cart 1 includes a housing 3 that is arranged to accommodate at least one, and typically two, thermally insulated containers 5, which are removably mounted within the service cart 1. Each container 5 provides a payload volume for storing foodstuffs, such as food and beverages, and is arranged to maintain the foodstuffs within a temperature range of +2°C to +8°C.

Each container 5 includes an outer casing 7, thermal insulation 9, which includes five vacuum panels 9a-e, an inner casing 11, a door 13, and a thermal energy storage unit 15. Each container 5 further includes a door locking mechanism 14, a first lifting handle 16 and a second lifting handle 18.

The outer casing 7 provides mechanical strength and impact resistance. The outer casing 7 is substantially rigid. The outer casing 7 is made from a plastics material, such as high density polyethylene (HDPE). The outer casing 7 is a moulded component, for example made by a rotary moulding process, so that there are no seams. The outer casing 7 is substantially cuboid and includes side walls 19,21,23,25,27. The outer casing 7 is open at one side 29.

Recesses 31 are formed in an outer surface of at least some of the outer casing side walls 19,21. The recesses 31 are arranged to engage rails 33 formed in the interior of the in-flight service cart 1. The arrangement is such that the container 5 can be mounted on the rails 33 and can be manually moved into and out of the housing 3 by sliding the container 5 along the rails 33.

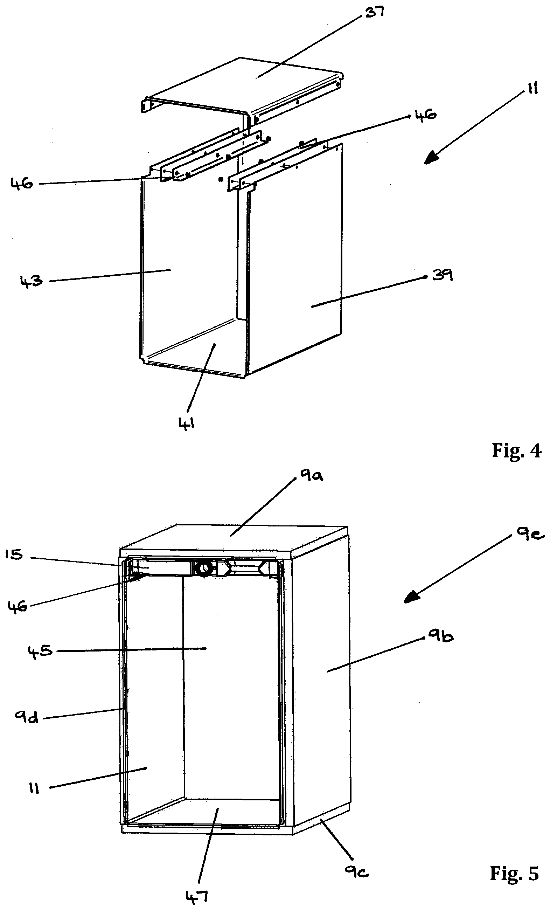

The inner casing 11 is located within the outer casing 7. The inner casing 11 includes side walls 37,39,41,43,45 (see Figure 4). The inner casing 11 is open at one side 47. The inner casing 11 is substantially cuboid, save for the open side.

The inner casing 11 is made from a material having good thermal conductivity properties and is arranged to conduct heat entering the container 5 to the thermal energy storage unit 15. Thus the inner casing 11 effectively conducts heat around the foodstuffs in the payload volume. Typically the inner casing 11 is made from a material having a thermal conductivity of at least 150W/m.K such as aluminium or copper, though aluminium is preferred due to its lower density, since this leads to a lower weight container 5. Weight is very important in aircraft applications. Aluminium is also preferred because it provides a food safe surface.

The vacuum insulation panels 9a-e are located between the outer casing walls 19,21,23,25,27 and the inner casing walls 37,39,41,43. Each vacuum insulation panel 9a-e includes a fumed silica core (not shown) and is evacuated to provide good insulating properties. Each vacuum insulation panel 9a-e is mounted on, or to, one of the inner casing walls 37,39,41,43, and is sized and shaped to substantially cover its respective wall. The panels 9a-e are arranged to overlap adjacent panels at their edges in the manner shown in Figure 5. This helps to ensure that each wall of the inner casing is properly insulated.

The thermal energy storage unit 15 is supported within the inner casing 11 by at least one support formation such as a bracket 46, ledge, or shelf. The thermal energy storage unit 15 is located in an upper region of the inner casing, preferably adjacent to the upper wall 37.

For arrangements including the shelf, the shelf splits the interior of the inner casing 11 into a first volume arranged to accommodate the payload and a second volume that is arranged to store the thermal energy storage unit 15.

The thermal energy storage unit 15 includes a substantially rigid container 149. The container is moulded and is preferably made from a plastics material such as HDPE, for example by a roto-moulding process. The container is filled with a phase change material. In preferred arrangements the phase change material is arranged to change phase at a temperature that is greater than or equal to -10°C, and preferably around -6°C. It has been found that using PCMs that change phase at temperatures in the range -8°C to -3°C provide a good balance for providing long-term cooling (up to 24 hours), while reducing the risk of food freezing. In is preferred to use a PCM that melts/freezes at that phase change temperature. Typically the PCM is a salt solution. PCMs that change phase at temperatures, such as -9°C; -8°C; -7°C; - 5°C; -4°C; -3°C; -2°C; -1°C; 0°C; 1°C; 2°C; 3°C; 4°C; and 5°C can also be used.

The phase change material is selected so that the phase change (melting/freezing in this case) temperature is significantly closer to the operating range of the payload volume than prior art devices that use dry ice. The advantage of this is that the risk of any of the foodstuffs freezing during operation is significantly reduced, while providing effective cooling to the foodstuffs to ensure that they stay within the desired temperature range. Being able to select a phase change material that changes phase at a temperature that is greater than or equal to -10°C is achievable because of the use of the thermally conductive inner casing 11, which conducts heat entering the container to the thermal energy storage unit 15, thereby dissipating the heat.

The thermal energy storage unit container 149 includes longitudinal raised formations 50 in the form of longitudinal ribs on at least one of its major surfaces 52. The raised formations 50 provides a small spacing which allows for expansion of the container 149. The container 149 includes longitudinal recesses 54 in the other major surface 56. The recesses 54 engage the brackets 46.

The thermal energy storage unit container 149 includes a handle 58 located adjacent a filling port 59.

The typical capacity of the thermal energy storage unit container 149 is around 1 litre for a thermally insulated container 5 having a payload volume of around 0.018m³.

In use, the thermal storage energy unit 15 is pre-conditioned in a freezer to reduce its temperature to around -20°C. The thermal energy storage unit so conditioned will maintain the temperature in the payload within the range +2°C to +8°C for around 24 hours in an aircraft having an average ambient temperature of around 20°C (typically between 10°C and 30°C), with a significantly low risk of any of the foodstuffs freezing.

The door 13 is arranged to provide access to the payload volume. The door 13 is attached to the side wall 25 of the outer casing via hinges 20. The door 13 includes an outer layer 22, an inner layer 24 and thermal insulation 26 located between the inner and outer layers 22, 24. Optionally, the thermal insulation 26 may include a vacuum insulation panel. Preferably the inner and/or outer layer 22, 24 of the door is made from a plastics material such as ABS. Other materials, such as sheet metal can be used.

A seal 49 is provided to seal the door 13 to the walls of the container 5. The seal 49 reduces the ingress of heat and contaminants into the container.

The locking mechanism 14 is located on an outer surface of the door 13. The locking mechanism includes a manually operable actuator 60, a handle 62, a first locking pin 64, a first rod 66, a second locking pin 68 and a second rod 70.

The handle 62 is pivotally attached to the actuator 60. The user uses the handle 62 to move the actuator 60 from a locking position to a non-locking position, and vice versa. The handle 62 can be used to pull the container 5 from the in-flight service cart 1.

The actuator 60 includes first and second ends 72,74. The actuator 60 is pivotally attached, towards its first end 72, to the door 13 by a pivot pin 76. The actuator 60 is arranged to rotate through an angle of around 40 degrees between the locking and non-locking positions.

The first end 72 of the actuator includes a first recess 78 having a first mounting 80. A first end 82 of the first rod is pivotally attached to the actuator 60 via the first mounting 80. A second end 84 of the first rod engages the first locking pin 64. The first rod 66 is arranged to move the first locking pin 64 between locking and non-locking positions in response to movement of the actuator 60. A first spring 86 biases the first locking pin 64 towards the locking position. The first locking pin 64 includes an inclined engagement surface 65.

The first end 72 of the actuator includes a second recess 88 having a second mounting 90. A first end 92 of the second rod is pivotally attached to the actuator 60 via the second mounting 90. A second end 94 of the first rod engages the second locking pin 68. The second rod 70 is arranged to move the second locking pin 68 between locking and non-locking positions in response to movement of the actuator 60. A second spring 96 biases the second locking pin 68 towards the locking position. The second locking pin 68 includes an inclined engagement surface 69.

The first and second locking pins 64,68 are mounted in an elongate housing 98. The first locking pin 64 is located towards a first end 100 of the housing. The first locking pin 64 is arranged to move along a first axis from a first (non-locking) position where it is fully stowed with the housing 98 to a second (locking) position where it protrudes from the housing, and vice versa, in response to movement of the actuator 60. The second locking pin 66 is located towards a second end 102 of the housing. The second locking pin 68 is arranged to move along the first axis from a first (non-locking) position where it is fully stowed with the housing 98 to a second (locking) position where it protrudes from the housing, and vice versa, in response to movement of the actuator 60.

The housing 98 is mounted on door 13 towards one edge 99 thereof, typically the edge opposite to the one having the hinges 20. The housing 98 is oriented so that it is substantially parallel to the edge 99 of the door 13. Thus, the first and second locking pins 64,68 move along an axis that is substantially parallel with the edge 99 of the door. In this instance the axis is a substantially vertical axis. Lock formations 104,106 are mounted on the side wall 21 of the outer casing adjacent the first and second ends 100,102 of the housing, when the door 13 is in the closed condition. The first and second lock formations 104,106 are arranged to receive the first and second locking pins 64,68 respectively when they protrude from the housing 98 in the locking positions. The lock formations 104,106 hold the door 13 in the closed position when the locking mechanism 14 is actuated by a user.

Since the locking pins 64,68 include inclined surfaces 65,69 and springs 86,96, it is possible for the user to push the door closed in a manner that automatically locks the door, without having to manually operate the actuator 60. When the door is pushed towards the closed position, the inclined surfaces 65,69 engage their respective lock formations 104,106. This causes the locking pins 64,68 to at least partially retract into the housing 98, thereby loading the springs 86,96. The locking pins 64,68 reach a position where they are no longer blocked by the locking formations 104,106 and the door moves to the fully closed position. The loaded springs 86,96 move the locking pins 64,68 into their locking positions when the door is fully closed.

An arcuate-shaped guide 108 is mounted on the door 13 towards the second end 74 of the actuator. The guide 108 guides movement of the actuator 60, and ensures that the force applied does not twist the actuator 60 out of its normal rotational plane.

The first lifting handle 16 is substantially U-shaped and is pivotally attached to an upper part of the container, via pivot pins 114. The first lifting handle is arranged to lie in a first recess 116 formed in the outer casing 7. The first lifting handle 16 can be arranged to lie over an upper part of the door 13 when stowed in the first recess 116. The second lifting handle 18 is substantially U-shaped and is pivotally attached to an upper part of the container, via pivot pins 120. The second lifting handle 18 is arranged to lie in a second recess 118,122, formed in the outer casing 7. The first and second lifting handles extend transversely across the container. Each handle 16,18 arranged to pivot about a respective axis that is arranged substantially perpendicularly to the longitudinal axis of the container, and to the axis about which the door pivots.

It will be appreciated by the skilled person that various modifications of the above embodiment are possible that fall within the scope of the current invention, such as different types of PCM may be used. For example, a hydrocarbon type PCM, such as a paraffin wax, can be used instead of a salt solution.

The thermal conductivity of the inner casing material can be at least 100, 120, 140, 160, 180, 200 W/m.K. The inner casing can be made from any suitable material, preferably a metal, and can be made from an alloy such as an aluminium alloy.

If necessary, additional thermal energy storage units 15 can be provided.

Wheels can be fitted to one of the containers 5 described in the embodiment above so that the container 5 itself becomes an in-flight service cart. In this case, it would be desirable to increase the size of the container so that it is similar in size to an existing in-flight service cart.

The door can include an inner casing material similar to the container walls.

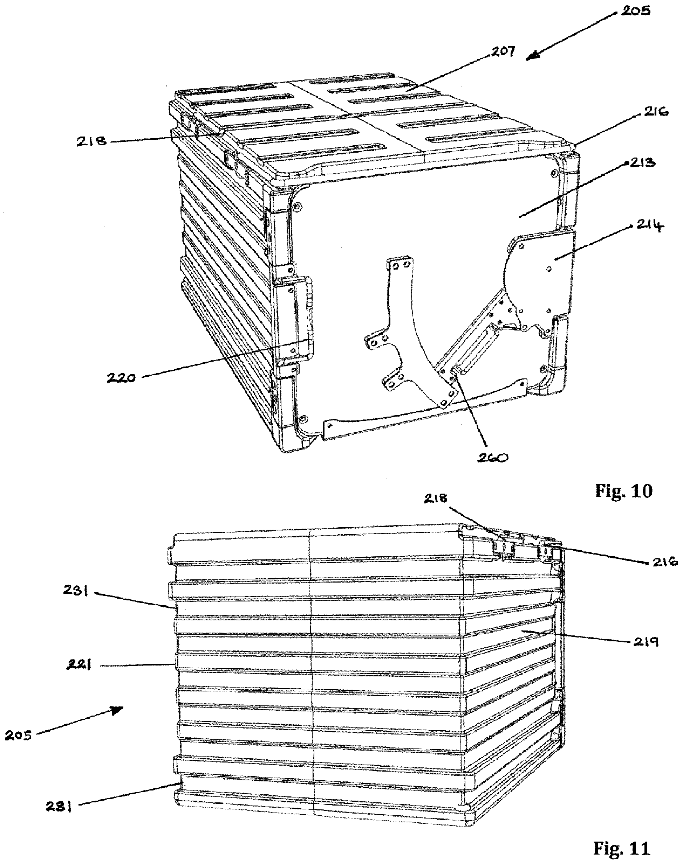

At least one of the containers mounted in the in-flight service cart can be arranged in accordance with the container 205 shown in Figures 10 and 11. The container 205 is similar to the container 5. For example, the container 205 includes an outer casing 207, thermal insulation, which includes five vacuum panels, an inner casing, a door 213, and at least one thermal energy storage unit. The container 205 further includes a door locking mechanism 214, a first lifting handle 216 and a second lifting handle 218.

The container 205 differs from the container 5 in the following respects.

The container 205 includes a handle 220 at the front of the container. The handle 220 is provided such that a user is able to pull the container 205 from the in-flight service cart. The handle 220 pivotally attached to the container 205. The handle 220 can be pivoted to a stowed position wherein it lies in a plane that is substantially parallel to the plane of the container door 213. The handle 220 can be pivoted to a pulling position where it is arranged substantially parallel to the plane of the door 213. The handle 220 is attached towards one edge of the container, typically the edge 220 to which the door is hinged. At least part of the handle is arranged substantially co-axially with the door hinge, and preferably the handle 220 is integrated into the door hinge. That is, extended parts of the handle 220 pivotally attach the door 213 to the container body.

Having an additional pulling handle 220 reduces loading on the locking mechanism 214 when removing the container 205 from the in-flight service cart.

The locking mechanism 214 has some differences compared with the locking mechanism 14. The locking mechanism 14 in the first embodiment is arranged to enable the door to be pushed closed, in that the locking pins 64,68 include inclined surfaces 65,69 which face towards the container body and the mechanism includes springs 86,96, which allow the locking pins 64,68 to retract into the housing 98 and biases the locking pins 64,68 into locking engagement with the locking formations 104,106.

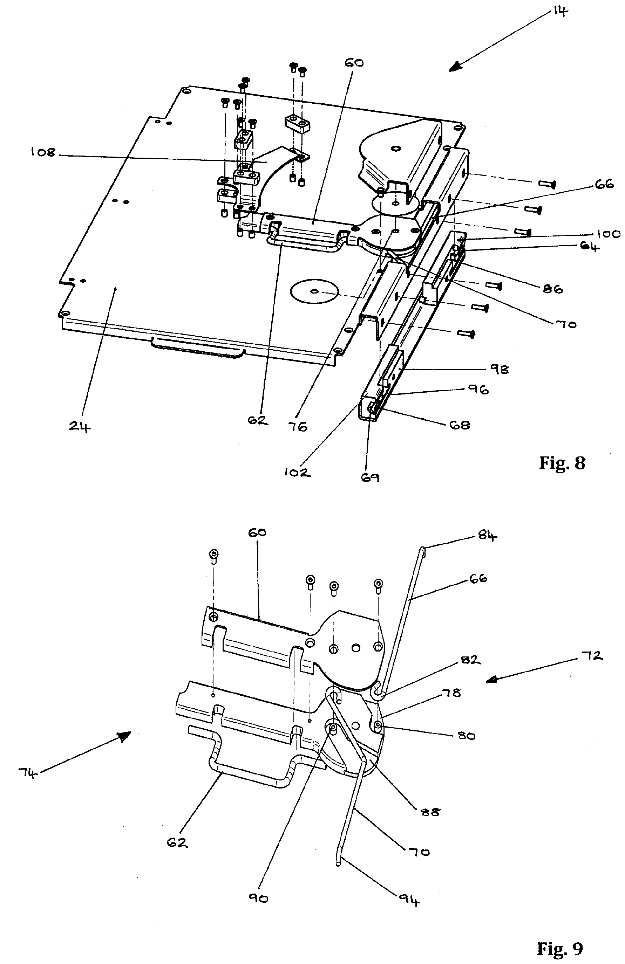

In the contrast, the locking mechanism 214 cannot be pushed closed. It requires operation of the manually operably actuator 260 to close the door. The mechanism 214 does not include springs. Furthermore, the inclined surfaces on the locking pins face outwards, that is away from the container body and locking formations (i.e. opposite to the inclined surface 69 in Figure 8). The advantage of having inclined faces on the rear of the locking pins is that the interaction of the inclined faces and locking formations pulls the door towards the container body, as the locking pins are inserted into their respective locking formations, thereby compressing the door seal. This increases the closing pressure on the door, which helps to ensure a good seal is achieved.

Optionally the door 213 can having an inner layer, which is thermally conductive. For example, the door can have an inner layer which is made from the same material as the inner casing.

The outer dimensions of the container 205 can be different from the container 5, and the recesses 231 formed in the outer casing side walls 219,221 have a different configuration. This enables the container to be mounted in a different in-flight service cart.

The container 205 differs from the container 5 in the following respects.

The container 205 includes a handle 220 at the front of the container. The handle 220 is provided such that a user is able to pull the container 205 from the in-flight service cart. The handle 220 pivotally attached to the container 205. The handle 220 can be pivoted to a stowed position wherein it lies in a plane that is substantially parallel to the plane of the container door 213. The handle 220 can be pivoted to a pulling position where it is arranged substantially parallel to the plane of the door 213. The handle 220 is attached towards one edge of the container, typically the edge 220 to which the door is hinged. At least part of the handle is arranged substantially co-axially with the door hinge, and preferably the handle 220 is integrated into the door hinge. That is, extended parts of the handle 220 pivotally attach the door 213 to the container body.

Having an additional pulling handle 220 reduces loading on the locking mechanism 214 when removing the container 205 from the in-flight service cart.

The locking mechanism 214 has some differences compared with the locking mechanism 14. The locking mechanism 14 in the first embodiment is arranged to enable the door to be pushed closed, in that the locking pins 64,68 include inclined surfaces 65,69 which face towards the container body and the mechanism includes springs 86,96, which allow the locking pins 64,68 to retract into the housing 98 and biases the locking pins 64,68 into locking engagement with the locking formations 104,106.

In the contrast, the locking mechanism 214 cannot be pushed closed. It requires operation of the manually operably actuator 260 to close the door. The mechanism 214 does not include springs. Furthermore, the inclined surfaces on the locking pins face outwards, that is away from the container body and locking formations (i.e. opposite to the inclined surface 69 in Figure 8). The advantage of having inclined faces on the rear of the locking pins is that the interaction of the inclined faces and locking formations pulls the door towards the container body, as the locking pins are inserted into their respective locking formations, thereby compressing the door seal. This increases the closing pressure on the door, which helps to ensure a good seal is achieved.

Optionally the door 213 can having an inner layer, which is thermally conductive. For example, the door can have an inner layer which is made from the same material as the inner casing.

The outer dimensions of the container 205 can be different from the container 5, and the recesses 231 formed in the outer casing side walls 219,221 have a different configuration. This enables the container to be mounted in a different in-flight service cart.

## Claims

1. An in-flight service cart (1) for use on an aircraft for maintaining a payload within a selected temperature range, said in-flight service cart (1) including: a housing (3) having a storage volume; and at least one thermally insulated container (5) removably mounted within the housing (3), said thermally insulated container (5) having: an outer casing (7); a thermally conductive inner casing (11) comprising a substantially cuboid receptacle having a payload volume for storing foodstuffs within the inner casing, the material of said inner casing having a thermal conductivity of at least 100 W/m.K; thermal insulation (9) located between the outer casing (7) and the inner casing (11), said thermal insulation including at least one vacuum insulation panel (9a-e); an opening (29, 47) at one side of the substantially cuboid receptacle providing access to the payload volume; a door (13) for closing the opening (29, 47), said door is hinged (20) at a substantially vertical edge of the thermally insulated container (5) when the container (5) is in its normal operating orientation; and at least one thermal energy storage unit (15) located within the inner casing (11), said thermal energy storage unit (15) including a phase change material that is arranged to change phase at a temperature greater than or equal to -10°C, wherein the thermal energy storage unit(s) (15) is positioned in thermal contact with the inner casing (11), the arrangement being such that the inner casing (11) provides a thermally conductive pathway for conducting heat entering the container (5) to the thermal energy storage unit (15).

2. An in-flight service cart (1) according to claim 1, wherein the inner casing (11) includes material having a thermal conductivity of at least 150 W/m.K, preferably at least 170 W/m.K, more preferably still at least 190 W/m.K, and more preferably still at least 200 W/m.K.

3. An in-flight service cart (1) according to any one of the preceding claims, wherein the inner casing (11) includes at least one of aluminium and an aluminium alloy; and preferably the inner casing receptacle comprises a thin walled structure.

4. An in-flight service cart (1) according to any one of the preceding claims, including a plurality of vacuum insulation panels (9a-e) located between the outer casing (7) and the inner casing (11), the arrangement being such that at least one vacuum insulation panel (9a-e) overlies each wall of the inner casing (11).

5. An in-flight service cart (1) according to any one of the preceding claims, including mounting means for supporting the thermal energy storage unit (15) in an upper region of the casing; and preferably the mounting means includes at least one of a shelf, a bracket (46), and a ledge.

6. An in-flight service cart (1) according to any one of the preceding claims, wherein the phase change temperature is greater than or equal to -9°C; the phase change temperature is less than or equal to 5°C and/or the phase change temperature is in the range -8°C to -3°C;

7. An in-flight service cart (1) according to any one of the preceding claims, wherein the phase change material mostly, or entirely, comprises salt solution; or the phase change material mostly, or entirely, comprises of a hydrocarbon.

8. An in-flight service cart (1) according to any one of the preceding claims, wherein the thermal energy storage unit (15) includes a substantially rigid container (149).

9. An in-flight service cart (1) according to any one of the preceding claims, wherein the door (13) includes an outer layer (22), an inner layer (24) and thermal insulation (26) disposed between the inner and outer layers (22,24); wherein the thermal insulation (26) between the inner and outer layers (22,24) includes a vacuum panel.

10. An in-flight service cart (1) according to any one of the preceding claims, including a seal (49) adjacent the opening (29,47) for substantially sealing the payload volume when the door (13) is in a closed condition.

11. An in-flight service cart (1) according to any one of the preceding claims, including a door locking mechanism (14).

12. An in-flight service cart (1) according to claim 11, wherein the locking mechanism (14) includes a pivotable actuator (60) moveable between first and second positions, wherein in the first position the locking mechanism (14) is in a locked condition and in the second position the locking mechanism (14) is in an unlocked condition.

13. An in-flight service cart (1) according to claim 12, wherein the actuator (60) is mounted on the door (13), the actuator (60) is arranged to pivot in a plane arranged substantially parallel with the plane of the door (13), and the actuator (60) is pivotable about a pivot axis, wherein the pivot axis is arranged substantially parallel with a longitudinal axis of the container.

14. An in-flight service cart (1) according to any one of claims 11 to 13, wherein the locking mechanism (14) includes a first locking pin (64), means for moving the first locking pin (64) in response to movement of the actuator (60), a first resilient means (86) for biasing the first locking pin (64) into a locking position, a second locking pin (66), means for moving the second locking pin (66) in response to movement of the actuator (60), and a second resilient means (96) for biasing the second locking pin (66) into a locking position.

15. An in-flight service cart (1) according to claim 14, wherein at least one of the first and second locking pins (64, 66) is arranged to move in a direction that is substantially parallel to an edge of the door (13); and/or in response to movement of the actuator (60), the first and second locking pins (64, 66) are arranged to move along substantially the same axis and the first and second locking pins (64, 66) are arranged to move in opposite directions to one another.

16. An in-flight service cart (1) according to claim 14 or 15, wherein the locking mechanism (14) is arranged in a manner that enables a user to push the door (13) closed, without having to manually operate the actuator (60), wherein at least one of first and second locking pins (64, 66) is arranged to move from a locking position to an unlocked position when the door (13) is pushed closed, thereby enabling the door (13) to move to the closed position, at least one of the first and second locking pins (64, 66) includes a sloped engagement surface (65,69) arranged to engage its respective locking formation (104,106), and wherein contact between the sloped engagement surface (65,69) and its respective locking formation (104,106), moves the locking pin (64, 66) from the locked position to the unlocked position.

17. An in-flight service cart (1) according to any one of claims 14 to 16, wherein at least one of the first and second locking pins (64, 66) includes a sloped engagement surface (65,69) arranged to engage its respective locking formation (102,104), and wherein contact between the sloped engagement surface (65,69) and its respective locking formation (102,104) pulls the door (13) towards the container body.

18. An in-flight service cart (1) according to claim 13 and any one of claims 14 to 17 when dependent on claim 14, including a handle (62) pivotally attached to the actuator (60).

19. An in-flight service cart (1) according to any one of the preceding claims, including a handle (220) for pulling the container out of the in-flight service cart (1), wherein the handle (220) for pulling the container out of the inflight service cart (1) is integrated with the door hinge (20).

20. An in-flight service cart (1) according to any one of the preceding claims, wherein the outer casing (7) comprises a single piece moulding.

21. A thermally insulated container (5) for an inflight service cart (1), which is arranged to be removably mounted within the inflight service cart (1), said thermally insulated container having: an outer casing (7); a thermally conductive inner casing (11) comprising a substantially cuboid receptacle having a payload volume for storing foodstuffs within the inner casing (11), the material of said inner casing (11) having a thermal conductivity of at least 100 W/m.K; thermal insulation (9) located between the outer casing (7) and the inner casing (11), said thermal insulation (9) including at least one vacuum insulation panel (9a-e); an opening (29, 47) at one side of the substantially cuboid receptacle providing access to the payload volume; a door (213) for closing the opening, said door is hinged (20) at a substantially vertical edge of the thermally insulated container (5) when the container is in its normal operating orientation; and at least one thermal energy storage unit (15) located within the inner casing (11), said thermal energy storage unit (15) including a phase change material that is arranged to change phase at a temperature greater than or equal to -10°C, wherein the thermal energy storage unit(s) is positioned in thermal contact with the inner casing (11), the arrangement being such that the inner casing (11) provides a thermally conductive pathway for conducting heat entering the container to the thermal energy storage unit (15).

22. A thermally insulated container (5) according to claim 21, wherein the container (5) includes a plurality of wheels.

## Patentansprüche

1. Bordservierwagen (1) zur Verwendung in einem Luftfahrzeug, um eine Ladung innerhalb eines ausgewählten Temperaturbereichs zu halten, wobei der Bordservierwagen (1) folgendes aufweist: ein Gehäuse (3) mit einem Lagervolumen; und mindestens einen wärmegedämmten Behälter (5), der entfernbar in dem Gehäuse (3) angebracht ist, wobei der wärmegedämmte Behälter (5) folgendes aufweist: ein äußeres Gehäuse (7); ein wärmeleitfähiges inneres Gehäuse (11), das ein im Wesentlichen quaderförmiges Behältnis mit einem Ladevolumen zur Lagerung von Nahrungsmitteln in dem inneren Gehäuse umfasst, wobei das Material des inneren Gehäuses eine Wärmeleitfähigkeit von mindestens 100 W/mK aufweist; eine Wärmedämmung (9), die sich zwischen dem äußeren Gehäuse (7) und dem inneren Gehäuse (11) befindet, wobei die Wärmedämmung mindestens eine Vakuumdämmplatte (9a-e) aufweist; eine Öffnung (29, 47) auf einer Seite des im Wesentlichen quaderförmigen Behältnisses, die Zugang zu dem Ladevolumen bereitstellt; eine Tür (13) zum Verschließen der Öffnung (29, 47), wobei die Tür an einer im Wesentlichen vertikalen Kante des wärmegedämmten Behälters (5) angeschlagen (20) ist, wenn sich der Behälter (5) in dessen normalen Betriebsausrichtung befindet; und mindestens eine Wärmeenergiespeichereinheit (15), die sich in dem inneren Gehäuse (11) befindet, wobei die Wärmeenergiespeichereinheit (15) ein Phasenwechselmaterial aufweist, das so angeordnet ist, dass es die Phase auf einer Temperatur von größer oder gleich -10 °C wechselt, wobei die Wärmeenergiespeichereinheit(en) (15) in thermischem Kontakt mit dem inneren Gehäuse (11) positioniert ist bzw. sind, wobei die Anordnung derart ist, dass das innere Gehäuse (11) einen wärmeleitfähigen Pfad zum Leiten der in den Behälter (5) eintretenden Wärme zu der Wärmeenergiespeichereinheit (15) bereitstellt.

2. Bordservierwagen (1) nach Anspruch 1, wobei das innere Gehäuse (11) ein Material mit einer Wärmeleitfähigkeit von mindestens 150 W/mK aufweist, vorzugsweise von mindestens 170 W/mK, bevorzugter von mindestens 190 W/mK und darüber hinaus bevorzugt von mindestens 200 W/mK.

3. Bordservierwagen (1) nach einem der vorstehenden Ansprüche, wobei das innere Gehäuse (11) mindestens Aluminium und/oder eine Aluminiumlegierung aufweist; und wobei das Behältnis des inneren Gehäuses vorzugsweise eine dünnwandige Struktur umfasst.

4. Bordservierwagen (1) nach einem der vorstehenden Ansprüche, der eine Mehrzahl von Vakuumdämmplatten (9a-e) aufweist, die sich zwischen dem äußeren Gehäuse (7) und dem inneren Gehäuse (11) befinden, wobei die Anordnung derart ist, dass mindestens eine Vakuumdämmwand (9a-e) jede Wand des inneren Gehäuses (11) überlagert.

5. Bordservierwagen (1) nach einem der vorstehenden Ansprüche, der ein Befestigungsmittel zum Tragen der Wärmeenergiespeichereinheit (15) in einem oberen Bereich des Gehäuses aufweist; und wobei das Befestigungsmittel vorzugsweise mindestens eines der folgenden aufweist: ein Regal, eine Halterung (46) und/oder eine Leiste.

6. Bordservierwagen (1) nach einem der vorstehenden Ansprüche, wobei die Phasenwechseltemperatur größer oder gleich -9 °C ist; wobei die Phasenwechseltemperatur größer oder gleich 5 °C ist; und/oder wobei die Phasenwechseltemperatur im Bereich von -8 °C bis -3 °C liegt.

7. Bordservierwagen (1) nach einem der vorstehenden Ansprüche, wobei das Phasenwechselmaterial überwiegend oder vollständig eine Salzlösung umfasst; oder wobei das Phasenwechselmaterial überwiegend oder vollständig einen Kohlenwasserstoff umfasst.

8. Bordservierwagen (1) nach einem der vorstehenden Ansprüche, wobei die Wärmeenergiespeichereinheit (15) einen im Wesentlichen steifen Behälter (149) aufweist.

9. Bordservierwagen (1) nach einem der vorstehenden Ansprüche, wobei die Tür (13) eine äußere Schicht (22), eine innere Schicht (24) und Wärmedämmung (26) aufweist, die sich zwischen der inneren und der äußeren Schicht (22, 24) befindet; wobei die Wärmedämmung (26) zwischen der inneren und der äußeren Schicht (22, 24) eine Vakuumplatte aufweist.

10. Bordservierwagen (1) nach einem der vorstehenden Ansprüche, mit einer Dichtung (49) angrenzend an die Öffnung (29, 47), um das Ladevolumen im Wesentlichen abzudichten, wenn sich die Tür (13) in einem geschlossen Zustand befindet.

11. Bordservierwagen (1) nach einem der vorstehenden Ansprüche, mit einem Türverriegelungsmechanismus (14).

12. Bordservierwagen (1) nach Anspruch 11, wobei der Verriegelungsmechanismus (14) einen drehbaren Aktor (60) aufweist, der zwischen einer ersten und einer zweiten Position beweglich ist, wobei sich der Verriegelungsmechanismus (14) an der ersten Position in einem verriegelten Zustand befindet, und wobei sich der Verriegelungsmechanismus (14) an der zweiten Position in einem entriegelten Zustand befindet.

13. Bordservierwagen (1) nach Anspruch 12, wobei der Aktor (60) an der Tür (13) montiert ist, wobei der Aktor (60) so angeordnet ist, dass er sich in einer Ebene dreht, die im Wesentlichen parallel zu der Ebene der Tür (13) angeordnet ist, und wobei der Aktor (60) um eine Drehachse drehbar ist, wobei die Drehachse im Wesentlichen parallel zu einer Längsachse des Behälters angeordnet ist.

14. Bordservierwagen (1) nach einem der Ansprüche 11 bis 13, wobei der Verriegelungsmechanismus (14) folgendes aufweist: einen ersten Sicherungsstift (64), ein Mittel zum Bewegen des ersten Sicherungsstifts (64) als Reaktion auf eine Bewegung des Aktors (60), ein erstes elastisches Mittel (86) zur Vorbelastung des ersten Sicherungsstifts (64) an eine Verriegelungsposition, einen zweiten Sicherungsstift (66), ein Mittel zum Bewegen des zweiten Sicherungsstifts (66) als Reaktion auf eine Bewegung des Aktors (60) und ein zweites elastisches Mittel (96) zur Vorbelastung des zweiten Sicherungsstifts (66) an eine Verriegelungsposition.

15. Bordservierwagen (1) nach Anspruch 14, wobei mindestens der erste und/oder der zweite Sicherungsstift (64, 66) so angeordnet ist, dass er sich in eine Richtung bewegt, die im Wesentlichen parallel zu einer Kante der Tür (13) ist; und/oder wobei der erste und der zweite Sicherungsstift (64, 66) so angeordnet sind, dass sie sich als Reaktion auf eine Bewegung des Aktors (60) entlang im Wesentlichen der gleichen Achse bewegen, und wobei der erste und der zweite Sicherungsstift (64, 66) so angeordnet sind, dass sie sich in entgegengesetzte Richtungen bewegen.

16. Bordservierwagen (1) nach Anspruch 14 oder 15, wobei der Verriegelungsmechanismus (14) so angeordnet ist, dass ein Benutzer die Tür (13) in einen geschlossenen Zustand drücken kann, ohne dass der Aktor (60) dafür manuell betätigt werden muss, wobei mindestens der erste und/oder der zweite Sicherungsstift (64, 66) so angeordnet ist, dass er sich aus einer verriegelnden Position an eine entriegelte Position bewegt, wenn die Tür (13) zugedrückt wird, wodurch sich die Tür (13) an die geschlossene Position bewegen kann, wobei mindestens der erste und/oder der zweite Sicherungsstift (64, 66) eine schräge Eingriffsoberfläche (65, 69) aufweist, die so angeordnet ist, dass sie mit ihrer entsprechenden Verriegelungsformation (104, 106) eingreift, und wobei der Kontakt zwischen der schrägen Eingriffsoberfläche (65, 69) und der entsprechenden Verriegelungsformation (104, 106) den Sicherungsstift (64, 66) aus der verriegelten Position an die entriegelte Position bewegt.

17. Bordservierwagen (1) nach einem der Ansprüche 14 bis 16, wobei mindestens der erste und/oder der zweite Sicherungsstift (64, 66) eine schräge Eingriffsoberfläche (65, 69) aufweist, die so angeordnet ist, dass sie mit ihrer entsprechenden Verriegelungsformation (102, 104) eingreift, und wobei der Kontakt zwischen der schrägen Eingriffsoberfläche (65, 69) und der entsprechenden Verriegelungsformation (102, 104) die Tür (13) in Richtung des Behälterkörpers zieht.

18. Bordservierwagen (1) nach Anspruch 13 und einem der Ansprüche 14 bis 17 in Abhängigkeit von Anspruch 14, mit einem Griff (62), der drehbar an dem Aktor (60) angebracht ist.

19. Bordservierwagen (1) nach einem der vorstehenden Ansprüche, mit einem Griff (220), um den Behälter aus dem Bordservierwagen (1) zu ziehen, wobei der Griff (220) zum Ziehen des Behälters aus dem Bordservierwagen (1) in das Türscharnier (20) integriert ist.

20. Bordservierwagen (1) nach einem der vorstehenden Ansprüche, wobei das äußere Gehäuse (7) ein einteiliges Formstück umfasst.

21. Wärmegedämmter Behälter (5) für einen Bordservierwagen (1), wobei der Behälter für eine entfernbare Anbringung in dem Bordservierwagen (1) angeordnet ist, wobei der wärmegedämmte Behälter folgendes aufweist: ein äußeres Gehäuse (7); ein wärmeleitfähiges inneres Gehäuse (11), das ein im Wesentlichen quaderförmiges Behältnis mit einem Ladevolumen zur Lagerung von Nahrungsmitteln in dem inneren Gehäuse (11) umfasst, wobei das Material des inneren Gehäuses (11) eine Wärmeleitfähigkeit von mindestens 100 W/mK aufweist; eine Wärmedämmung (9), die sich zwischen dem äußeren Gehäuse (7) und dem inneren Gehäuse (11) befindet, wobei die Wärmedämmung (9) mindestens eine Vakuumdämmplatte (9a-e) aufweist; eine Öffnung (29, 47) auf einer Seite des im Wesentlichen quaderförmigen Behältnisses, die Zugang zu dem Ladevolumen bereitstellt; eine Tür (213) zum Verschließen der Öffnung, wobei die Tür an einer im Wesentlichen vertikalen Kante des wärmegedämmten Behälters (5) angeschlagen (20) ist, wenn sich der Behälter in dessen normalen Betriebsausrichtung befindet; und mindestens eine Wärmeenergiespeichereinheit (15), die sich in dem inneren Gehäuse (11) befindet, wobei die Wärmeenergiespeichereinheit (15) ein Phasenwechselmaterial aufweist, das so angeordnet ist, dass es die Phase auf einer Temperatur von größer oder gleich -10 °C wechselt, wobei die Wärmeenergiespeichereinheit(en) in thermischem Kontakt mit dem inneren Gehäuse (11) positioniert ist bzw. sind, wobei die Anordnung derart ist, dass das innere Gehäuse (11) einen wärmeleitfähigen Pfad zum Leiten der in den Behälter eintretenden Wärme zu der Wärmeenergiespeichereinheit (15) bereitstellt.

22. Wärmegedämmter Behälter (5) nach Anspruch 21, wobei der Behälter (5) mehrere Räder aufweist.

## Revendications

1. Chariot de services à bord (1) destiné à être utilisé dans un aéronef pour maintenir une charge utile dans une plage de températures sélectionnée, ledit chariot de services à bord (1) comprenant : un logement (3) ayant un volume de stockage ; et au moins un contenant (5) thermiquement isolé monté de manière amovible dans le logement (3), ledit contenant (5) thermiquement isolé ayant : une enveloppe extérieure (7) ; une enveloppe intérieure (11) thermiquement conductrice comprenant un réceptacle sensiblement cubique ayant un volume de charge utile pour stocker des denrées alimentaires à l'intérieur de l'enveloppe intérieure, le matériau de ladite enveloppe intérieure ayant une conductivité thermique d'au moins 100 W/m.K ; une isolation thermique (9) située entre l'enveloppe extérieure (7) et l'enveloppe intérieure (11), ladite isolation thermique comprenant au moins un panneau d'isolation sous vide (9a-e) ; une ouverture (29, 47) sur un côté du réceptacle sensiblement cubique permettant d'accéder au volume de charge utile ; une porte (13) pour fermer l'ouverture (29, 47), ladite porte étant articulée (20) sur un bord sensiblement vertical du contenant (5) thermiquement isolé lorsque le contenant (5) est dans son orientation normale de fonctionnement ; et au moins une unité de stockage d'énergie thermique (15) située à l'intérieur de l'enveloppe intérieure (11), ladite unité de stockage d'énergie thermique (15) comprenant un matériau à changement de phase qui est conçu pour changer de phase à une température supérieure ou égale à -10°C, la ou les unités de stockage d'énergie thermique (15) étant positionnées en contact thermique avec l'enveloppe intérieure (11), l'agencement étant tel que l'enveloppe intérieure (11) fournit un chemin thermiquement conducteur pour conduire la chaleur entrant dans le contenant (5) à l'unité de stockage d'énergie thermique (15).

2. Chariot de services à bord (1) selon la revendication 1, l'enveloppe intérieure (11) comprenant un matériau ayant une conductivité thermique d'au moins 150 W/m.K, de préférence d'au moins 170 W/m.K, plus préférablement encore d'au moins 190 W/m.K, et plus préférablement encore d'au moins 200 W/m.K.

3. Chariot de services à bord (1) selon l'une quelconque des revendications précédentes, l'enveloppe intérieure (11) comprenant au moins un élément parmi l'aluminium et un alliage d'aluminium ; et de préférence le réceptacle d'enveloppe intérieure comprenant une structure à paroi mince.

4. Chariot de services à bord (1) selon l'une quelconque des revendications précédentes, comprenant une pluralité de panneaux d'isolation sous vide (9a-e) situés entre l'enveloppe extérieure (7) et l'enveloppe intérieure (11), l'agencement étant tel qu'au moins un panneau d'isolation sous vide (9a-e) recouvre chaque paroi de l'enveloppe intérieure (11).

5. Chariot de services à bord (1) selon l'une quelconque des revendications précédentes, comprenant un moyen de montage pour supporter l'unité de stockage d'énergie thermique (15) dans une région supérieure de l'enveloppe ; et de préférence le moyen de montage comprenant une étagère, un support (46) et/ou un rebord.

6. Chariot de services à bord (1) selon l'une quelconque des revendications précédentes, la température de changement de phase étant supérieure ou égale à -9 °C ; la température de changement de phase étant inférieure ou égale à 5 °C et/ou la température de changement de phase étant dans la plage comprise entre -8 °C et -3 °C.

7. Chariot de services à bord (1) selon l'une quelconque des revendications précédentes, le matériau à changement de phase comprenant principalement, ou entièrement, une solution saline ; ou le matériau à changement de phase comprenant principalement, ou entièrement, un hydrocarbure.

8. Chariot de services à bord (1) selon l'une quelconque des revendications précédentes, l'unité de stockage d'énergie thermique (15) comprenant un contenant sensiblement rigide (149).

9. Chariot de services à bord (1) selon l'une quelconque des revendications précédentes, la porte (13) comprenant une couche extérieure (22), une couche intérieure (24) et une isolation thermique (26) disposée entre les couches intérieure et extérieure (22, 24) ; l'isolation thermique (26) entre les couches intérieure et extérieure (22, 24) comprenant un panneau sous vide.

10. Chariot de services à bord (1) selon l'une quelconque des revendications précédentes, comprenant un joint (49) adjacent à l'ouverture (29, 47) pour sceller sensiblement le volume de charge utile lorsque la porte (13) est dans un état fermé.

11. Chariot de services à bord (1) selon l'une quelconque des revendications précédentes, comprenant un mécanisme de verrouillage de porte (14).

12. Chariot de services à bord (1) selon la revendication 11, le mécanisme de verrouillage (14) comprenant un actionneur (60) pivotant mobile entre des première et seconde positions, dans la première position, le mécanisme de verrouillage (14) étant dans un état verrouillé et dans la seconde position, le mécanisme de verrouillage (14) étant dans un état déverrouillé.

13. Chariot de services à bord (1) selon la revendication 12, l'actionneur (60) étant monté sur la porte (13), l'actionneur (60) étant conçu pour pivoter dans un plan disposé sensiblement parallèlement au plan de la porte (13), et l'actionneur (60) pouvant pivoter autour d'un axe de pivotement, l'axe de pivotement étant disposé sensiblement parallèlement à un axe longitudinal du contenant.

14. Chariot de services à bord (1) selon l'une quelconque des revendications 11 à 13, le mécanisme de verrouillage (14) comprenant une première broche de verrouillage (64), un moyen pour déplacer la première broche de verrouillage (64) en réponse au mouvement de l'actionneur (60), un premier moyen élastique (86) pour rappeler la première broche de verrouillage (64) dans une position de verrouillage, une seconde broche de verrouillage (66), un moyen pour déplacer la seconde broche de verrouillage (66) en réponse au mouvement de l'actionneur (60), et un second moyen élastique (96) pour rappeler la seconde broche de verrouillage (66) dans une position de verrouillage.

15. Chariot de services à bord (1) selon la revendication 14, au moins une des première et seconde broches de verrouillage (64, 66) étant conçue pour se déplacer dans une direction qui est sensiblement parallèle à un bord de la porte (13) ; et/ou en réponse au mouvement de l'actionneur (60), les première et seconde broches de verrouillage (64, 66) étant conçues pour se déplacer sensiblement le long du même axe et les première et seconde broches de verrouillage (64, 66) étant conçues pour se déplacer dans des directions opposées l'une à l'autre.

16. Chariot de services à bord (1) selon la revendication 14 ou 15, le mécanisme de verrouillage (14) étant conçu d'une manière qui permet à un utilisateur de pousser la porte (13) fermée, sans avoir à actionner manuellement l'actionneur (60), au moins l'une des première et seconde broches de verrouillage (64, 66) étant conçue pour se déplacer d'une position de verrouillage à une position déverrouillée lorsque la porte (13) est fermée en étant poussée, permettant ainsi à la porte (13) de se déplacer vers la position fermée, au moins l'une des première et seconde broches de verrouillage (64, 66) comprenant une surface de mise en prise inclinée (65, 69) conçue pour venir en prise avec sa formation de verrouillage (104, 106) respective, et le contact entre la surface de mise en prise inclinée (65, 69) et sa formation de verrouillage (104, 106) respective, déplaçant la broche de verrouillage (64, 66) de la position verrouillée à la position déverrouillée.

17. Chariot de services à bord (1) selon l'une quelconque des revendications 14 à 16, au moins l'une des première et seconde broches de verrouillage (64, 66) comprenant une surface de mise en prise inclinée (65, 69) conçue pour venir en prise avec sa formation de verrouillage (102, 104) respective, et le contact entre la surface de mise en prise inclinée (65, 69) et sa formation de verrouillage (102, 104) respective tirant la porte (13) vers le corps de contenant.

18. Chariot de services à bord (1) selon la revendication 13 et l'une quelconque des revendications 14 à 17 lorsqu'elle dépend de la revendication 14, comprenant une poignée (62) fixée de manière pivotante à l'actionneur (60).

19. Chariot de services à bord (1) selon l'une quelconque des revendications précédentes, comprenant une poignée (220) pour tirer le contenant hors du chariot de services à bord (1), la poignée (220) pour tirer le contenant hors du chariot de services à bord (1) étant intégrée à la charnière de porte (20).

20. Chariot de services à bord (1) selon l'une quelconque des revendications précédentes, l'enveloppe extérieure (7) comprenant un moulage d'une seule pièce.

21. Contenant (5) thermiquement isolé pour un chariot de services à bord (1), qui est conçu pour être monté de manière amovible à l'intérieur du chariot de services à bord (1), ledit contenant thermiquement isolé ayant : une enveloppe extérieure (7) ; une enveloppe intérieure (11) thermiquement conductrice comprenant un réceptacle sensiblement cubique ayant un volume de charge utile pour stocker des produits alimentaires à l'intérieur de l'enveloppe intérieure (11), le matériau de ladite enveloppe intérieure (11) ayant une conductivité thermique d'au moins 100 W/m.K ; une isolation thermique (9) située entre l'enveloppe extérieure (7) et l'enveloppe intérieure (11), ladite isolation thermique (9) comprenant au moins un panneau d'isolation sous vide (9a-e) ; une ouverture (29, 47) sur un côté du réceptacle sensiblement cubique permettant d'accéder au volume de charge utile ; une porte (213) pour fermer l'ouverture, ladite porte étant articulée (20) sur un bord sensiblement vertical du contenant (5) thermiquement isolé lorsque le contenant est dans son orientation normale de fonctionnement ; et au moins une unité de stockage d'énergie thermique (15) située à l'intérieur de l'enveloppe intérieure (11), ladite unité de stockage d'énergie thermique (15) comprenant un matériau à changement de phase qui est conçu pour changer de phase à une température supérieure ou égale à -10 °C, la ou les unités de stockage d'énergie thermique étant positionnées en contact thermique avec l'enveloppe intérieure (11), l'agencement étant tel que l'enveloppe intérieure (11) fournit un chemin thermiquement conducteur pour conduire la chaleur entrant dans le récipient vers l'unité de stockage d'énergie thermique (15).

22. Contenant (5) thermiquement isolé selon la revendication 21, le contenant (5) comprenant une pluralité de roues.
